# EUROPÄISCHE PATENTSCHRIFT

(11) **EP 3 717 799 B1**
(45) Veröffentlichungstag und Bekanntmachung des Hinweises auf die Patenterteilung: **12.01.2022**
(21) Anmeldenummer: 18814542.9
(22) Anmeldetag: 30.11.2018
(51) Int. Cl.: F16H 55/08

(54) **BAUGRUPPE UND VERFAHREN ZUR AKUSTIKBEEINFLUSSUNG VON ZAHNRÄDERN**
ASSEMBLY AND METHOD FOR ACOUSTICALLY INFLUENCING TOOTHED WHEELS
ENSEMBLE ET PROCÉDÉ POUR INFLUER ACOUSTIQUEMENT SUR DES ROUES DENTÉES

(30) Priorität: 03.12.2017 DE 102017221736
(43) Veröffentlichungstag der Anmeldung: 07.10.2020
(73) Patentinhaber: Audi AG, 85045 Ingolstadt (DE); Audi Hungaria ZRT, 9027 Gyõr (HU)
(72) Erfinder: TÖRÖK, István, 9026 Györ (HU); PEHNELT, Sebastian, 93336 Altmannstein (DE)
(86) Internationale Anmeldenummer: PCT/EP2018/083121
(87) Internationale Veröffentlichungsnummer: WO 2019/106140

(56) Entgegenhaltungen:
- DE-A1- 4 112 122
- US-A1- 2014 256 223
- US-A1- 2016 178 046
- US-B1- 6 390 893

## Beschreibung

Die Erfindung betrifft ein Verfahren zur Akustikbeeinflussung von Zahnrädern.

Bei Antrieben bisheriger Fahrzeuge werden, insbesondere bei Ausgleichswellen, Zahnradverbindungen eingesetzt, die oft als Geradverzahnungen ausgebildet sind. Bei einem Ineinandergreifen zweier Zahnräder einer Zahnradverbindung wird eine Kontaktlinie bzw. -zone, die parallel zu einer Drehachse eines Zahnrades verläuft, ausgebildet. Die Zähne der Zahnräder weisen Flanken auf, wobei die Flanken Welligkeiten aufweisen, die theoretisch parallel zu der Kontaktlinie bzw. -zone, sowie zueinander sind. Dadurch können die Welligkeiten auf den eingreifenden Flanken leicht ineinandergreifen, wodurch jedoch ein Geräuschpegel entsteht. Zudem sind Verfahren zur Analyse der Welligkeiten von Zähnen bekannt.

Aus dem Dokument DE 10 2014 109 914 A1 ist eine Vorrichtung mit einem Zahnrad und einer Stirnradstufe sowie ein Verfahren zur Herstellung des Zahnrads bekannt. Es ist eine Kontaktlinie bzw. -zone einer Verzahnung offenbart, die an ihrem äußeren Ende zwei schräge Abschnitte aufweist, welche mit einem mittigen, gekrümmten Abschnitt tangential verbunden sind. Das Dokument DE 2 011 245 A1 offenbart eine Evolventen-Schrägverzahnung für Stirnräder mit Außen- und Innenverzahnung und ein Werkzeug zur Fertigbearbeitung. Dabei ist eine Stirnradverzahnung offenbart, die eine Breitenballigkeit aufweist und einen weicheren Zahneingriff erzeugt.

Aus dem Dokument CH 525 737 A sind ein Verfahren und eine Vorrichtung zum Herstellen oder Prüfen schrägverzahnter Evolventen-Stirnräder bekannt. Offenbart ist dabei, dass eine Geometrie eines Zahnrades derart ausgelegt ist, dass eine Kontaktlinie bzw. -zone geradlinig und schräg über eine Zahnflanke verläuft.

Aus dem Dokument US 2016 / 178 046 A1 ist eine Schienenfahrzeuggetriebevorrichtung mit parallelem Kardanantriebssystem bekannt, umfassend ein Schrägritzel und ein Schrägverzahnungsrad, die zusammen ein Schrägverzahnungspaar bilden.

Aus dem Dokument US 6 390 893 B1 ist ein Verfahren zum Bearbeiten einer Zahnflanke eines Zahnrads mit einem Endbearbeitungswerkzeug bekannt.

Aus dem Dokument DE 41 12 122 A1 ist ein Verfahren zum Zahnflankenschleifen oder -fräsen innen- bzw. außenverzahnter Werkstücke mit einem profilierten scheibenförmigen Werkzeug im diskontinuierlichen Teilverfahren bekannt, bei dem die Werkzeugdrehung im Wesentlichen die Schnittgeschwindigkeit erzeugt und das Werkzeug zur Bearbeitung einer Lücke oder einer Flanke am Werkstück eine Schraubbewegung ausführt.

Aus dem Dokument US 2014 / 256 223 A1 ist ein Verfahren zur Hartfeinbearbeitung von Zahnflanken mit Korrekturen und / oder Modifikationen an einer Zahnradschneidemaschine bekannt, wobei entsprechende Zahnradpaarungen, die innerhalb eines Getriebes oder einer Testvorrichtung miteinander in Eingriff stehen, unter Berücksichtigung der jeweiligen Gegenflanken bearbeitet werden. Das Verfahren weist folgende Schritte auf: Bereitstellen des Zahnrades bzw. der Zahnräder, Ermittlung der Beschaffenheit der Oberfläche der mindestens einen Flanke des Zahnes des ersten Zahnrades, Bearbeiten der Oberfläche der mindestens einen Flanke des Zahnes des ersten Zahnrades basierend auf Prozessvariablen, Bereitstellen des Zahnrades bzw. der Zahnräder mit der mindestens einen bearbeiteten Flanke des Zahnes des ersten Zahnrades in einem Getriebe und Inbetriebnahme des Getriebes.

Im Stand der Technik sind Vorrichtungen und Verfahren zur Herstellung und Prüfung von Zahnrädern bekannt. Dabei ist es jedoch denkbar, dass es durch das Eingreifen der Zähne in die Zahnräder, insbesondere bei einer Geradverzahnung, zu einer erhöhten Geräuschbildung kommt. Eine Bestrebung der Fahrzeugindustrie ist es jedoch, den Geräuschpegel von Fahrzeugen zunehmend zu senken.

Daher ist es Aufgabe der vorliegenden Erfindung, die Entstehung hoher Geräuschpegel wegen ineinandergreifender Welligkeiten der Zahnradflanken zu vermeiden.

Diese Aufgabe wird durch ein Verfahren mit den Merkmalen des Patentanspruchs 1 gelöst.

Gegenstand der vorliegenden Erfindung ist ein Verfahren zur Akustikbeeinflussung von Zahnrädern. Das Verfahren umfasst eine Baugruppe mit mindestens einem ersten Zahnrad mit Zähnen und einem zweiten Zahnrad mit Zähnen, wobei die Zähne Flanken aufweisen, und wobei mindestens eine Flanke eines Zahnes des ersten Zahnrades mit einer Flanke eines Zahnes des zweiten Zahnrades in Eingriff bringbar ist.

Das erfindungsgemäße Verfahren umfasst dabei in einem ersten Schritt das Bereitstellen der Baugruppe. Die Baugruppe kann mindestens zwei Zahnräder mit Zähnen umfassen. Alternativ kann die Baugruppe mindestens drei Zahnräder mit Zähnen umfassen.

In einem weiteren Schritt wird ein winkelauflösendes Streulichtverfahren zur Ermittlung einer Makrowelligkeit bzw. -topografie und einer Mikrowelligkeit bzw. -topografie einer Oberfläche mindestens einer Flanke eines Zahnes des ersten Zahnrades durchgeführt. Die Makrowelligkeit bzw. -topografie kann alternativ mittels eines Koordinatenmessgerätes erfasst werden. Die Mikrowelligkeit bzw. -topografie kann alternativ mittels eines taktilen oder optischen Rauheitsmessgerätes erfasst werden. Das Streulichtverfahren bietet die Möglichkeit, eine Makrowelligkeit bzw. -topografie und eine Mikrowelligkeit bzw. -topografie mittels eines einzigen Verfahrens zu ermitteln. So kann eine Makrowelligkeit bzw. -topografie in Kombination mit einer Mikrowelligkeit bzw. -topografie betrachtet werden. Zudem ist mittels des winkelauflösenden Streulichtverfahrens eine bis zu hundertprozentige Online-Überwachung des Verfahrens zur Akustikbeeinflussung möglich. Mittels des Streulichtverfahrens kann eine Mikrowinkelverteilung einer Oberfläche mindestens einer Flanke eines Zahnes eines Zahnrades gemessen werden. Optional wird eine Mikrowinkelverteilung einer Oberfläche einer Flanke eines Zahnes des ersten Zahnrades und einer Flanke eines Zahnes des zweiten Zahnrades, die in Eingriff mit der Flanke des Zahnes des ersten Zahnrades ist, gemessen. Die Messung kann längs oder quer zu einer Bearbeitungsrichtung erfolgen. Durch das Streulichtverfahren kann die Zeit zur Erfassung der Oberfläche von jeweiligen Flanken von jeweiligen Zähnen verringert werden.

In einem nächsten Schritt erfolgt eine Ermittlung einer Varianz einer Mikrowinkelverteilung A_{q} der mindestens einen Flanke des Zahnes des ersten Zahnrades als Maß für eine Mikrostruktur und damit Ermittlung einer Beschaffenheit der Oberfläche der Flanke des Zahnes des ersten Zahnrades. Dabei kann auch für eine Flanke eines Zahnes des zweiten Zahnrades, die in die Flanke des Zahnes des ersten Zahnrades eingreift, eine Ermittlung einer Varianz einer Mikroverteilung A_{q} als Maß für eine Mikrostruktur durchgeführt werden, um damit eine Beschaffenheit der Oberfläche der Flanke des Zahnes des zweiten Zahnrades zu ermitteln.

In einem weiteren Schritt erfolgt eine Darstellung der Beschaffenheit der Oberfläche der mindestens einen Flanke des Zahnes des ersten Zahnrades in einem Falschfarbenbild und Einblenden einer Kontaktlinie bzw. -zone zwischen der mindestens einen Flanke des Zahnes des ersten Zahnrades und mindestens einer eingreifenden Flanke des Zahnes des zweiten Zahnrades. Die Kontaktzone ist ein Bereich, in der eine Flanke eines Zahnes eines ersten Zahnrades, bei einem Eingreifen einer Flanke eines Zahnes eines zweiten Zahnrades in die Flanke des Zahnes des ersten Zahnrades, auf die Flanke des zweiten Zahnrades trifft und einen Kontakt ausbildet. In einem Idealfall ist die Kontaktzone annährend als Kontaktlinie ausgebildet. Um ein akustisch auffälliges Verhalten der ineinandergreifenden Flanken der Zähne des ersten und des zweiten Zahnrades zu vermeiden, bedarf es eines Auftretens von vorbestimmten Mikrowinkeln (A_{q}-Werte) in der Kontaktzone bzw. -linie. Vorzugsweise liegen die Mikrowinkel A_{q}-Werte zwischen 2 und 90. Optional kann eine Darstellung der Beschaffenheit der Oberfläche der Flanke des Zahnes des zweiten Zahnrades ebenfalls in einem Falschfarbenbild dargestellt werden. Ferner kann ein periodisches Auftreten der Mikrowinkel analysiert werden und über die Periodizität der Mikrowinkelverteilung λ_{Aq} quantifiziert werden.

In einem nächsten Schritt erfolgt eine Ermittlung eines mikrowinkelverteilungsrelevanten Akustikwinkels α_{Aq} zwischen einer durch die Bearbeitung erzeugten Vorzugsrichtung und der Kontaktlinie bzw. -zone zwischen der mindestens einen Flanke des Zahnes des ersten Zahnrades und mindestens einer eingreifenden Flanke des Zahnes des zweiten Zahnrades. Der Akustikwinkel α_{Aq} hat einen Einfluss auf das Akustikverhalten der Verzahnung dahingehend, dass der Akustikwinkel α_{Aq} in einem vorbestimmten Bereich liegen muss, um einen hohen Geräuschpegel zu vermeiden. Vorzugsweise liegt der Akustikwinkel dabei zwischen 5° und 85° oder zwischen 95° und 175°.

In einem weiteren Schritt erfolgt ein Schleifen, der Oberfläche der mindestens einen Flanke des Zahnes des ersten Zahnrades basierend auf Prozessvariablen, insbesondere einer Einstellung einer Verschränkung und/oder einer Einstellung einer Balligkeit, insbesondere einer Höhenballigkeit und/oder einer Breitenballigkeit, und dadurch Endbearbeitung der Kontaktlinie bzw. -zone zwischen der Flanke des Zahnes des ersten Zahnrades und der Flanke des Zahnes des zweiten Zahnrades, wobei die Oberfläche derart geschliffen wird, dass die Kontaktlinie bzw. - zone in einem Akustikwinkel zwischen 5° und 85° oder zwischen 95° und 175°, zu einer Achse einer Welligkeit der Flanke des Zahnes des zweiten Zahnrades und/oder einer Flanke des Zahnes des ersten Zahnrades, die in die Flanke des Zahnes des zweiten Zahnrades eingreift, ausgebildet wird. Durch die Endbearbeitung (beispielsweise Schleifen, Walzen, Glätten) wird die Kontaktlinie bzw. -zone ausgebildet, die derart eingerichtet ist, dass sie eine Mikrowinkelverteilung und damit einen Akustikwinkel ausbildet, der in dem vorbestimmten Bereich, vorzugsweise zwischen 2 und 90, für einen niedrigen Geräuschpegel liegt. Beispielsweise wird die Kontaktlinie bzw. - zone zwischen der Flanke des Zahnes des ersten Zahnrades und der Flanke des Zahnes des zweiten Zahnrades in einem spitzen oder stumpfen Winkel zu einer Achse einer Welligkeit der Flanke des Zahnes des ersten Zahnrades oder der Flanke des Zahnes des zweiten Zahnrades geschliffen. Durch die Schleifung mit eingestellten Prozessvariablen, insbesondere mit einer Verschränkung und einer geringen Breitenballigkeit, kann die Oberfläche der mindestens einen Flanke eines Zahnes des ersten Zahnrades derart endbearbeitet werden, dass die Kontaktlinie bzw. -zone zwischen der Flanke des Zahnes des ersten Zahnrades und der Flanke des Zahnes des zweiten Zahnrades einen Akustikwinkel zwischen 5° und 85° oder zwischen 95° und 175° in Bezug auf die zur Drehachse parallel verlaufenden Welligkeit der Flanke des Zahnes des ersten oder des zweiten Zahnrades aufweist. Durch die derartige Schleifung kann die Akustik der mindestens zwei ineinandergreifenden Zahnräder durch das Streulichtverfahren beeinflusst werden. Optional kann die Oberfläche mindestens einer Flanke eines Zahnes basierend auf einer Kombination von Prozessvariablen, insbesondere einer Verschränkung und/oder einer Höhenballigkeit und/oder einer Breitenballigkeit geschliffen werden. Die Oberfläche kann auch gewalzt werden. Durch das Schleifen wird die Oberfläche der mindestens einen Flanke des Zahnes des ersten Zahnrades bearbeitet, wodurch eine Kontaktlinie bzw. -zone zwischen der Flanke des Zahnes des ersten Zahnrades und der Flanke des Zahnes des zweiten Zahnrades beeinflusst wird. Durch die Ausbildung bzw. Bearbeitung der Flanke des Zahnes des ersten Zahnrades in der Weise, dass sie einen spitzen oder stumpfen Winkel zu einer Achse einer Welligkeit der Flanke des Zahnes des zweiten Zahnrades ausbildet, verläuft die Kontaktlinie bzw. -zone zwischen der Flanke des Zahnes des ersten Zahnrades und der Flanke des Zahnes des zweiten Zahnrades nicht parallel zu einer Welligkeit der Flanke des Zahnes des ersten und/oder zweiten Zahnrades. Dadurch wird vermieden, dass die Flanke des Zahnes des ersten Zahnrades und die Flanke des Zahnes des zweiten Zahnrades und deren Welligkeiten der Flanken leicht ineinandergreifen können und dadurch einen hohen Geräuschpegel ausbilden. Besonders bevorzugt sind alle Flanken aller Zähne eines ersten Zahnrades derart geschliffen, dass die Flanken der Zähne des ersten Zahnrades nicht parallel zu Kontaktlinien bzw. -zonen und/oder zu Welligkeiten von Flanken von Zähnen eines zweiten Zahnrades ausgebildet sind.

In einem weiteren Schritt erfolgt das Bereitstellen der Baugruppe mit der mindestens einen geschliffenen Flanke des Zahnes des ersten Zahnrades in einem Getriebe, Inbetriebnahme des Getriebes und Eingreifen der geschliffenen Flanke des Zahnes des ersten Zahnrades in eine bzw. in die Flanke eines bzw. des Zahnes des zweiten Zahnrades. Durch Bereitstellen der Baugruppe mit den oben beschriebenen Merkmalen in einem Getriebe eines Fahrzeuges kann der Geräuschpegel des Antriebs verringert werden. Das erfindungsgemäße Verfahren ermöglicht zudem eine Zeitersparnis bei einer flächenhaften Abtastung des mindestens einen Zahnrades, wodurch bei der Überwachung einer Serienproduktion gegebenenfalls eine hundertprozentige Messung anstelle einer Stichprobenmessung erfolgen kann. Dies wiederum kann zu einer höheren Prozesskenntnis führen. Das erfindungsgemäße Verfahren vereint in sich die Möglichkeit einer Oberflächenprüfung (Mikrowelligkeit bzw. -topografie) und einer Formprüfung (Makrowelligkeit bzw. -topografie). Dadurch lässt sich eines der beiden bisher bekannten oder lassen sich gar beide Prüfverfahren ersetzen, wodurch Kosten eingespart werden können.

In einer Weiterbildung des Verfahrens wird das winkelauflösende Streulichtverfahren zur Ermittlung einer Makrowelligkeit bzw. -topografie und einer Mikrowelligkeit bzw. -topografie einer Oberfläche für mindestens eine Flanke eines Zahnes des ersten Zahnrades und mindestens eine in die Flanke des Zahnes des ersten Zahnrades eingreifende Flanke eines Zahnes des zweiten Zahnrades durchgeführt. Dies bietet den Vorteil, dass sowohl mindestens eine Flanke eines Zahnes eines ersten Zahnrades als auch mindestens eine Flanke eines Zahnes des zweiten Zahnrades, welche in Eingriff mit der Flanke des Zahnes des ersten Zahnrades kommt, gleichzeitig erfassbar sind.

In einer weiteren Weiterbildung des Verfahrens erfolgt eine Anzeige, wenn der Akustikwinkel α_{Aq} außerhalb eines tolerablen Wertebereichs liegt. Ein Wert des Akustikwinkels α_{Aq} ist tolerabel, wenn dieser innerhalb des vorbestimmten Bereichs, vorzugsweise zwischen 5° und 85° oder zwischen 95° und 175° liegt. Die Anzeige kann als bildliches oder akustisches Signal erfolgen. Dies bietet den Vorteil, dass während des Verfahrens zur Einstellung der Akustikbeeinflussung einem Facharbeiter Abweichungen des Akustikwinkels α_{Aq} außerhalb eines tolerablen Wertebereichs direkt angezeigt werden können.

In einer bevorzugten Weiterbildung des Verfahrens wird die Oberfläche der mindestens einen Flanke des Zahnes des ersten Zahnrades derart bearbeitet, vorzugsweise geschliffen, dass sie eine eingestellte Verschränkung und eine eingestellte Balligkeit aufweist. Eine derartige Schleifung ist besonders vorteilhaft, um eine Akustik ineinandergreifender Zähne zu beeinflussen. Durch die Ausgestaltung der Oberfläche mindestens einer Flanke eines Zahnes eines ersten Zahnrades mit den derart eingestellten Prozessvariablen kann die Oberfläche der mindestens einen Flanke des Zahnes des ersten Zahnrades derart verbogen werden, dass die Kontaktlinie bzw. -zone zwischen der Flanke des Zahnes des ersten Zahnrades und der Flanke des Zahnes des zweiten Zahnrades einen Akustikwinkel zwischen 5° und 85° oder zwischen 95° und 175° in Bezug auf eine zu einer Drehachse des Getriebes parallel verlaufenden Welligkeit der Flanke des Zahnes des ersten und/oder des zweiten Zahnrades ausbildet. Dadurch wird vermieden, dass eine Welligkeit der Flanke des Zahnes des ersten Zahnrades in eine Flanke des Zahnes des zweiten Zahnrades leicht eingreifen kann und dadurch einen hohen Geräuschpegel ausbildet. Optional wird durch das Schleifen der Oberfläche der Flanke des Zahnes des ersten Zahnrades mindestens eine Prozessvariable, insbesondere eine durch die Bearbeitung erzeugte Vorzugsrichtung und/oder ein Akustikwinkel α_{Aq} und/oder eine Periodizität der Mikrowinkel λ_{Aq} und/oder eine Mikrowinkelverteilung und/oder ein Spitze-Spitze-Wert eingestellt. Dies bietet den Vorteil, dass die Prozessvariablen gezielt durch das Verfahren eingestellt werden können. Dadurch kann bedarfsgerecht eine Prozessvariable verändert werden, um einen Geräuschpegel zu beeinflussen.

Die Erfindung ist anhand von Ausführungsformen in den Zeichnungen schematisch dargestellt und wird unter Bezugnahme auf die Zeichnungen weiter beschrieben. Es zeigt:
- Figur 1: eine schematische Darstellung einer Anordnung einer Ausführungsform einer Baugruppe umfassend ein erstes Zahnrad und ein zweites Zahnrad,
- Figur 2: eine schematische Darstellung eines Zahnes eines Zahnrades mit einer Darstellung von Flankenlinien (a, m, f) und Profillinien (o, m, u) auf einer Fläche einer Flanke, die erfindungsgemäß eingestellt werden kann,
- Figur 3: einen schematischen Verlauf einer Ausführungsform des erfindungsgemäßen Verfahrens zur Akustikbeeinflussung von Zahnrädern,
- Figur 4: eine schematische Darstellung eines Messverfahren von erfindungsgemäß geschliffenen Flanken von Zähnen.
- Figur 5a: eine schematische Darstellung der Ermittlung eines mikrowinkelverteilungsrelevanten Akustikwinkels α_{Aq} zwischen einer durch die Bearbeitung erzeugten Vorzugsrichtung und einer Kontaktzone bzw. -linie.
- Figur 5b: eine schematische Darstellung der Ermittlung eines mikrowinkelverteilungsrelevanten Akustikwinkels α_{Aq} zwischen einer durch die Bearbeitung erzeugten Vorzugsrichtung und einer Kontaktzone bzw. -linie.

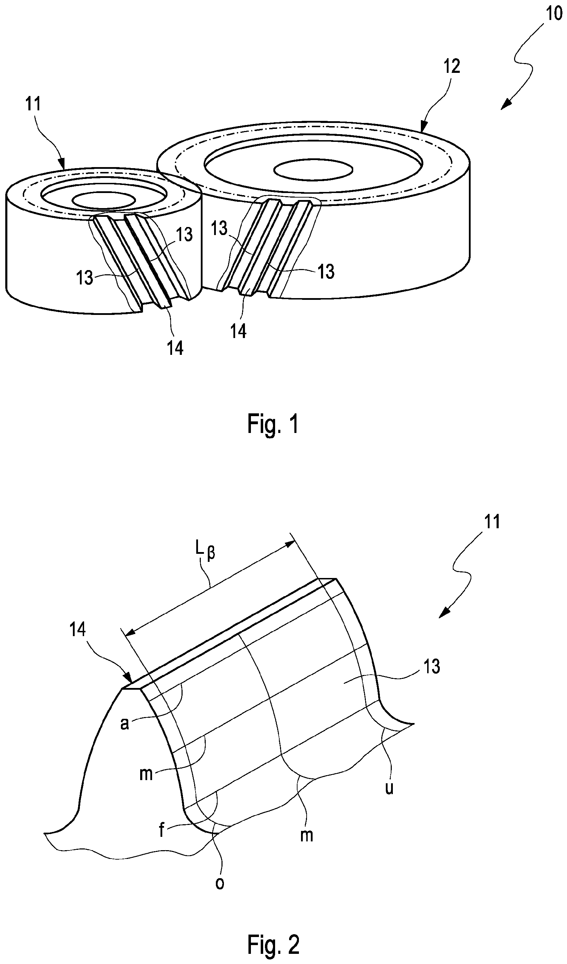

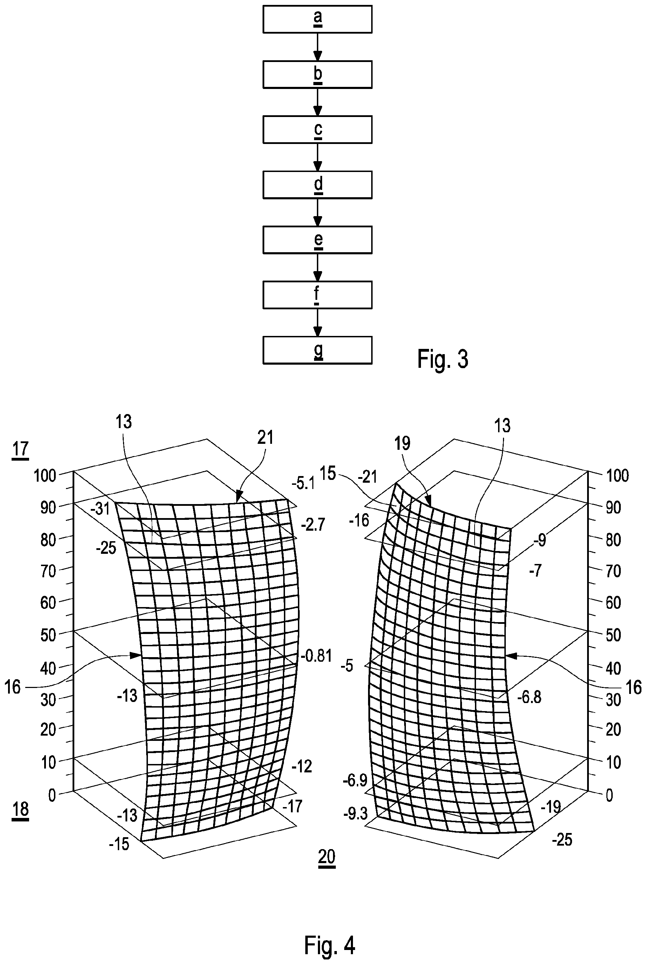

In der Figur 1 ist eine schematische Darstellung einer Anordnung einer Ausführungsform einer Baugruppe 10 umfassend ein erstes Zahnrad 11 und ein zweites Zahnrad 12 am Beispiel einer Schrägverzahnung gezeigt. Dabei weisen sowohl das erste Zahnrad 11 als auch das zweite Zahnrad 12 Zähne 14 auf. Die Zähne 14 weisen dabei jeweils Flanken 13 auf. Mindestens eine Flanke 13 eines Zahnes 14 des ersten Zahnrades 11 ist dabei mit einer Flanke 13 eines Zahnes 14 des zweiten Zahnrades 12 in Eingriff bringbar. Erfindungsgemäß wird bei einem Ineinandergreifen der Flanke 13 des Zahnes 14 des ersten Zahnrades 11 in die Flanke 13 des Zahnes 14 des zweiten Zahnrades 12 eine - in Figur 1 nicht gezeigte - Kontaktlinie bzw. -zone ausgebildet, die in einem Winkel, beispielsweise einem spitzen oder stumpfen Winkel, zu einer Achse einer Welligkeit der Flanke 13 des Zahnes 14 des ersten Zahnrades 11 und/oder des zweiten Zahnrades 12 ausgebildet ist. Dabei ist die Kontaktlinie bzw. - zone basierend auf einer Ausgestaltung einer Fläche, insbesondere einer Oberfläche, der Flanke 13 des Zahnes 14 ausgebildet. Die Oberfläche der Flanke 13 ist basierend auf einer Einstellungskombination von Prozessvariablen, insbesondere einer - in der Figur 4 gezeigten - Einstellung einer Verschränkung 15 und/oder einer Einstellung einer Balligkeit 16, insbesondere einer Höhenballigkeit und/oder einer Breitenballigkeit, ausgebildet. Als besonders vorteilhaft gilt die Ausbildung der Oberfläche der Flanke 13 basierend auf mindestens einer - in der Figur 4 gezeigten - eingestellten Verschränkung 15 und einer eingestellten geringen Balligkeit 16.

In der Figur 2 ist eine schematische Darstellung eines Zahnes 14 eines ersten Zahnrades 11 mit einer Darstellung von Flankenlinien (a, m, f) und Profillinien (o, m, u) einer Fläche einer Flanke 13 gezeigt. Entlang der Ausrichtung der Flankenlinien (a, m, f) und der Profillinien (o, m, u) erfolgt vorzugsweise die erfindungsgemäße Ausgestaltung der Fläche der Flanke 13, insbesondere eine Schleifung der Fläche basierend auf einer Einstellung von Prozessvariablen, insbesondere einer Einstellung einer - in der Figur 4 gezeigten - Verschränkung 15 und/oder einer Einstellung einer Balligkeit 16, insbesondere einer Höhenballigkeit und/oder einer Breitenballigkeit. Dadurch wird bei einem Ineinandergreifen der Flanke 13 des Zahnes 14 des - in Figur 1 gezeigten - ersten Zahnrades 11 und der Flanke 13 des Zahnes 14 des - in der Figur 1 gezeigten - zweiten Zahnrades 12 eine - in der Figur 2 nicht gezeigte - Kontaktlinie bzw. -zone ausgebildet. Die Balligkeit ist dabei abhängig von der Länge L_{β} des Zahnes des Zahnrades. Vorzugsweise liegt eine geringe Balligkeit in einem Bereich von wenigen µm. Als grober Richtwert gilt hierbei ein Maß von L_{β} /100.

In der Figur 3 ist ein schematischer Verlauf einer Ausführungsform des erfindungsgemäßen Verfahrens zur Akustikbeeinflussung von Zahnrädern gezeigt, umfassend eine Baugruppe mit mindestens einem ersten Zahnrad mit Zähnen und einem zweiten Zahnrad mit Zähnen, wobei die Zähne Flanken aufweisen, und wobei mindestens eine Flanke eines Zahnes des ersten Zahnrades mit einer Flanke eines Zahnes des zweiten Zahnrades in Eingriff bringbar ist. Das erfindungsgemäße Verfahren umfasst dabei in einem ersten Schritt a) das Bereitstellen der Baugruppe. Die Baugruppe kann in einem Getriebe eines Fahrzeugs bereitgestellt werden. Die Baugruppe umfasst vorzugsweise mindestens zwei Zahnräder mit Zähnen. Alternativ kann die Baugruppe auch mindestens drei Zahnräder mit Zähnen umfassen. In einem weiteren Schritt b) wird ein winkelauflösendes Streulichtverfahren zur Ermittlung einer Makrowelligkeit bzw. -topografie und einer Mikrowelligkeit bzw. -topografie einer Oberfläche mindestens einer Flanke eines Zahnes des ersten Zahnrades durchgeführt. Die Makrowelligkeit bzw. -topografie kann alternativ mittels eines Koordinatenmessgerätes erfasst werden. Die Mikrowelligkeit bzw. -topografie kann alternativ mittels eines taktilen oder optischen Rauheitsmess- bzw. Oberflächenmessgerätes erfasst werden. Mittels des Streulichtverfahrens wird eine Mikrowinkelverteilung der Oberfläche der Flanke des Zahnes des ersten Zahnrades gemessen. Alternativ kann mittels des Streulichtverfahrens zudem eine Mikrowinkelverteilung der Oberfläche der Flanke des Zahnes des zweiten Zahnrades gemessen werden. Durch das Streulichtverfahren kann insbesondere die Zeit zur Erfassung der Oberfläche von Flanken von Zähnen verringert werden. In einem Schritt c) erfolgt eine Ermittlung einer Varianz einer Mikrowinkelverteilung A_{q} der mindestens einen Flanke des Zahnes des ersten Zahnrades als Maß für eine Mikrostruktur und damit eine Ermittlung einer Beschaffenheit der Oberfläche der mindestens einen Flanke des Zahnes des ersten Zahnrades. Optional kann auch eine Ermittlung einer Varianz einer Mikrowinkelverteilung A_{q} als Maß für eine Mikrostruktur und damit einer Beschaffenheit der Oberfläche einer Flanke eines Zahnes des zweiten Zahnräder ermittelt werden. In einem Schritt d) erfolgt eine Darstellung der Beschaffenheit der Oberfläche der mindestens einen Flanke des Zahnes des ersten Zahnrades in einem Falschfarbenbild und ein Einblenden einer Kontaktzone bzw. -linie zwischen der mindestens einen Flanke des Zahnes des ersten Zahnrades und mindestens einer eingreifenden Flanke des Zahnes des zweiten Zahnrades. Die Kontaktzone bzw. -linie ist eine Zone, in der die Flanke des Zahnes des ersten Zahnrades auf die Flanke des Zahnes des zweiten Zahnrades trifft. Um ein akustisch auffälliges Verhalten der ineinandergreifenden Flanken der Zähne des ersten und des zweiten Zahnrades zu vermeiden, bedarf es eines Auftretens von Mikrowinkeln (A_{q}-Werte) eines vorbestimmten Wertes in der Kontaktzone bzw. -linie zwischen der Flanke des Zahnes des ersten Zahnrades und der Flanke des Zahnes des zweiten Zahnrades. Zudem kann ein periodisches Auftreten der Mikrowinkel analysiert werden und über die Periodizität der Mikroverteilung λ_{Aq} quantifiziert werden. In einem Schritt e) erfolgt eine Ermittlung eines mikrowinkelverteilungsrelevanten Akustikwinkels α_{Aq} zwischen einer durch die Bearbeitung erzeugten Vorzugsrichtung und der Kontaktzone bzw. -linie zwischen der mindestens einen Flanke des Zahnes des ersten Zahnrades und mindestens einer eingreifenden Flanke des Zahnes des zweiten Zahnrades. Der Akustikwinkel α_{Aq} hat einen Einfluss auf das Akustikverhalten der Verzahnung dahingehend, dass der Akustikwinkel α_{Aq} in einem vorbestimmten Bereich liegen muss, um einen hohen Geräuschpegel zu vermeiden. In einem Schritt f) erfolgt eine Bearbeitung bzw. ein Schleifen der Oberfläche der Flanke des Zahnes des ersten Zahnrades basierend auf Prozessvariablen, insbesondere einer Einstellung einer Verschränkung und/oder einer Einstellung einer Balligkeit, insbesondere einer Höhenballigkeit und/oder einer Breitenballigkeit, und dadurch Endbearbeitung der Kontaktlinie bzw. -zone zwischen der mindestens einen Flanke des Zahnes des ersten Zahnrades und der Flanke des Zahnes des zweiten Zahnrades, wobei die Oberfläche derart geschliffen wird, dass die Kontaktlinie bzw. -zone in einem Aksutikwinkel, insbesondere einem Akustikwinkel zwischen 5° und 85° oder zwischen 95° und 175°, zu einer Achse einer Welligkeit der Flanke des Zahnes des ersten Zahnrades und/oder der Flanke des Zahnes des zweiten Zahnrades, die in die Flanke des Zahnes des ersten Zahnrades eingreift, ausgebildet wird. Die Achsen der Welligkeiten der Flanken der Zähne des ersten und des zweiten Zahnrades verlaufen in einem ursprünglichen, ungeschliffenen Zustand jeweils parallel zu der Kontaktlinie bzw. -zone zwischen der Flanke des Zahnes des ersten Zahnrades und der Flanke des Zahnes des zweiten Zahnrades. Erfindungsgemäß wird die Oberfläche mindestens einer Flanke eines Zahnes des ersten Zahnräder basierend auf einer Kombination von Prozessvariablen, insbesondere einer Verschränkung und/oder einer Höhenballigkeit und/oder einer Breitenballigkeit geschliffen. Insbesondere wird die Oberfläche der Flanke basierend auf einer Verschränkung und einer geringen Breitenballigkeit geschliffen. Durch die Bearbeitung bzw. das Schleifen wird die Oberfläche der Fläche der Flanke des Zahnes des ersten Zahnrades bearbeitet, wodurch die Kontaktlinie bzw. -zone beeinflusst wird.

Durch die Schleifung mit eingestellten Prozessvariablen, insbesondere mit einer Verschränkung und einer geringen Breitenballigkeit kann die Oberfläche der Flanke des Zahnes des ersten Zahnrades vorzugsweise derart geschliffen werden, dass die Kontaktlinie bzw. -zone einen Akustikwinkel zwischen 5° und 85° oder zwischen 95° und 175° in Bezug auf die zur Drehachse parallel verlaufenden Welligkeit der Flanke des Zahnes des ersten Zahnrades und/oder des zweiten Zahnrades aufweist. Insbesondere wird mindestens die Fläche der Flanke des Zahnes des ersten Zahnrades derart bearbeitet bzw. geschliffen, dass sie eine eingestellte Verschränkung und eine eingestellte geringe Balligkeit aufweist. Die Ausbildung einer geringen Balligkeit der Flanke des ersten Zahnes des ersten Zahnrades zusammen mit der Verschränkung ist besonders geeignet, um eine Kontaktlinie bzw. -zone auszubilden, die einen Akustikwinkel zwischen 5° und 85° oder zwischen 95° und 175°, in Bezug auf die zur Drehachse parallel verlaufenden Welligkeit der Flanke des Zahnes des zweiten Zahnrades, aufweist. Andere Kombinationen der genannten Prozessvariablen sind ebenfalls möglich. In einem weiteren Schritt g) erfolgt das Bereitstellen der Baugruppe mit der mindestens einen geschliffenen Flanke des Zahnes des ersten Zahnrades in einem Getriebe, Inbetriebnahme des Getriebes und Eingreifen der geschliffenen Flanke des Zahnes des ersten Zahnrades in eine Flanke eines Zahnes des zweiten Zahnrades. Durch Bereitstellen der Baugruppe mit den oben beschriebenen Merkmalen in einem Getriebe eines Fahrzeuges kann der Geräuschpegel des Antriebs verringert werden.

Figur 4 zeigt eine schematische Darstellung von topologisch geschliffenen Flächen von Flanken 13 von - nicht gezeigten - Zähnen. Dargestellt sind eine linke Flanke 21 und eine rechte Flanke 19 von Zähnen, die in ihrer Erstreckung nach oben 17 und unten 18 in Bezug zu einem Grund 20 dargestellt sind. Die linke Flanke 21 zeigt dabei eine Oberfläche, die eine Balligkeit 16 aufweist, während die rechte Flanke 19 eine Oberfläche aufweist, die durch eine Verschränkung 15 und eine Balligkeit 16 ausgebildet ist. Die Verschränkung 15 erstreckt sich dabei vorzugsweise von oben 17 nach unten 18. Die Balligkeit 16 kann als eine Höhenballigkeit und/oder eine Breitenballigkeit ausgebildet sein. Die Oberflächen der Flanken 13 sind durch die Bearbeitung bzw. die Schleifung basierend auf den Prozessvariablen Verschränkung 15 und Balligkeit 16 derart ausgebildet, dass sie bei einem Ineinandergreifen der Flanken 13 zweier Zahnräder eine - nicht gezeigte - Kontaktlinie bzw. -zone zwischen - nicht gezeigten - ineinandergreifenden Flanken 13 der - nicht gezeigten - Zähne ausbilden, wobei die ausgebildete Kontaktlinie bzw. -zone vorzugsweise einen Akustikwinkel zwischen 5° und 85° oder zwischen 95° und 175° in Bezug auf eine zu einer Drehachse des Getriebes parallel verlaufenden Welligkeit der Flanken 13 der Zähne der Zahnräderausbildet. Durch die Verwendung von Zahnrädern mit derart geschliffenen Zähnen kann ein Geräuschpegel, der beim Betrieb eines Getriebes auftritt, verringert werden.

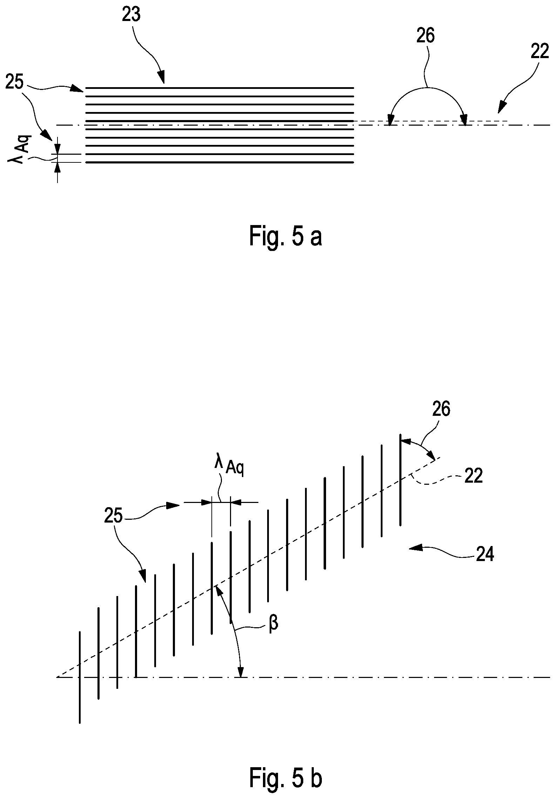

Figur 5a zeigt eine schematische Darstellung der Ermittlung eines mikrowinkelverteilungsrelevanten Akustikwinkels α_{Aq} 26 zwischen einer durch die Bearbeitung erzeugten Vorzugsrichtung und einer Kontaktzone bzw. - linie 22. Dabei ist in einem Fall einer Geradverzahnung 23 mit einem Winkel β von 0° von - nicht gezeigten - Zahnrädern, ein Akustikwinkel α_{Aq} 26 von 180° dargestellt. Der Akustikwinkel α_{Aq} 26 hat einen Einfluss auf das Akustikverhalten der Verzahnung der Zahnräder in der Gestalt, dass der Akustikwinkel α_{Aq}26 in einem vorbestimmten Bereich liegen muss, um einen hohen Geräuschpegel zu vermeiden. Um einen leisen Betrieb der Verzahnung zu gewährleisten sollte der Akustikwinkel α_{Aq}26 vorzugsweise zwischen 5° bis 85° oder zwischen 95° und 175° liegen. Bei einem Akustikwinkel α_{Aq} 26 von 90° oder 180° wird der Betrieb der ineinandergreifenden Zähne der Verzahnung als zu laut empfunden. Ferner kann ein periodisches Auftreten der Mikrowinkel analysiert werden und über die Periodizität der Mikrowinkelverteilung λ_{Aq} 25 quantifiziert werden.

Figur 5b zeigt eine schematische Darstellung der Ermittlung eines mikrowinkelverteilungsrelevanten Akustikwinkels α_{Aq}26 zwischen einer durch die Bearbeitung erzeugten Vorzugsrichtung und einer Kontaktzone bzw. - linie 22. Dabei ist ein Fall einer Schrägverzahnung 24, bei der der Winkel β ungleich 0° ist, dargestellt. Die Kontaktzone bzw. -linie 22 verläuft somit nicht parallel zu einer Drehachse eines Zahnrades. Der Akustikwinkel α_{Aq} 26 ist zwischen der Kontaktzone bzw. linie 22 und periodisch auftretenden Mikrowinkelverteilung λ_{Aq} 25 ausgebildet.

### Bezugszeichenliste

- 10: Baugruppe
- 11: erstes Zahnrad
- 12: zweites Zahnrad
- 13: Flanke
- 14: Zahn
- 15: Verschränkung
- 16: Balligkeit
- 17: oben
- 18: unten
- 19: rechte Flanke
- 20: Grund
- 21: linke Flanke
- 22: Kontaktzone bzw. -linie
- 23: Geradverzahnung
- 24: Schrägverzahnung
- 25: Mikrowinkelverteilung
- 26: Akustikwinkel α_{Aq}

## Patentansprüche

1. Verfahren zur Akustikbeeinflussung von Zahnrädern (11, 12) umfassend eine Baugruppe (10) mit mindestens einem ersten Zahnrad (11) mit Zähnen (14) und einem zweiten Zahnrad mit Zähnen (12), wobei die Zähne (14) Flanken (13) aufweisen, und wobei mindestens eine Flanke (13) eines Zahnes (14) des ersten Zahnrades (11) mit einer Flanke (13) eines Zahnes (14) des zweiten Zahnrades (12) in Eingriff bringbar ist, umfassend die Schritte:
a) Bereitstellen der Baugruppe (10),
b) Durchführung eines winkelauflösenden Streulichtverfahrens zur Ermittlung einer Makrowelligkeit bzw. -topografie und einer Mikrowelligkeit bzw. -topografie einer Oberfläche der mindestens einen Flanke (13) des Zahnes (14) des ersten Zahnrades (11),
c) Ermittlung einer Varianz einer Mikrowinkelverteilung A_{q} (25) der mindestens einen Flanke (13) des Zahnes (14) des ersten Zahnrades (11) als Maß für eine Mikrostruktur und damit Ermittlung einer Beschaffenheit der Oberfläche der mindestens einen Flanke (13) des Zahnes (14) des ersten Zahnrades (11),
d) Darstellung der Beschaffenheit der Oberfläche der mindestens einen Flanke (13) des Zahnes (14) des ersten Zahnrades (11) in einem Falschfarbenbild und Einblenden einer Kontaktzone bzw. -linie (22) zwischen der mindestens einen Flanke (13) des Zahnes (14) des ersten Zahnrades (11) und der mindestens einen eingreifenden Flanke (13) des Zahnes (14) des zweiten Zahnrades (12),
e) Ermittlung eines mikrowinkelverteilungsrelevanten Akustikwinkels α_{Aq} (26) zwischen einer durch die Bearbeitung erzeugten Vorzugsrichtung und der Kontaktzone bzw. -linie (22) zwischen der mindestens einen Flanke (13) des Zahnes (14) des ersten Zahnrades (11) und der mindestens einen eingreifenden Flanke (13) des Zahnes (14) des zweiten Zahnrades (12),
f) Schleifen der Oberfläche der mindestens einen Flanke (13) des Zahnes (14) des ersten Zahnrades (10) basierend auf Prozessvariablen, insbesondere einer Einstellung einer Verschränkung (15) und/oder einer Einstellung einer Balligkeit (16), insbesondere einer Höhenballigkeit und/oder einer Breitenballigkeit, und dadurch Endbearbeitung der Kontaktlinie bzw. - zone (22) zwischen der Flanke (13) des Zahnes (14) des ersten Zahnrades (11) und der Flanke (13) des Zahnes (14) des zweiten Zahnrades (12), wobei die Oberfläche derart geschliffen wird, dass die Kontaktlinie bzw. -zone (22) in einem Akustikwinkel zwischen 5° und 85° oder zwischen 95° und 175°, zu einer Achse einer Welligkeit der eingreifenden Flanke (13) des Zahnes (14) des zweiten Zahnrades (12) und/oder der Flanke des Zahnes des ersten Zahnrades (11) in die Flanke (13) des Zahns (14) des zweiten Zahnrades (12) eingreift, ausgebildet wird,
g) Bereitstellen der Baugruppe (10) mit der mindestens einen geschliffenen Flanke (13) des Zahnes (14) des ersten Zahnrades (11) in einem Getriebe, Inbetriebnahme des Getriebes.

2. Verfahren nach Anspruch 1, **dadurch gekennzeichnet, dass** das winkelauflösende Streulichtverfahren zur Ermittlung einer Makrowelligkeit bzw. -topografie und einer Mikrowelligkeit bzw. -topografie einer Oberfläche für die mindestens eine Flanke (13) des Zahnes (14) des ersten Zahnrades (11) und die mindestens eine in die Flanke (13) des Zahnes (14) des ersten Zahnrades (11) eingreifende Flanke (13) des Zahnes (14) des zweiten Zahnrades (12) durchgeführt wird.

3. Verfahren nach einem der Ansprüche 1 oder 2, **dadurch gekennzeichnet, dass** eine Anzeige erfolgt, wenn der Akustikwinkel α_{Aq} (26) außerhalb eines tolerablen Wertebereichs liegt.

4. Verfahren nach einem der Ansprüche 1 bis 3, **dadurch gekennzeichnet, dass** die Oberfläche der mindestens einen Flanke (13) des Zahnes (14) des ersten Zahnrades (11) derart bearbeitet wird, dass sie eine eingestellte Verschränkung (15) und eine eingestellte Balligkeit (16) aufweist.

## Claims

1. Method for acoustically influencing toothed wheels (11, 12) comprising an assembly (10) having at least one first toothed wheel (11) with teeth (14) and a second toothed wheel with teeth (12), wherein the teeth (14) have flanks (13), and wherein at least one flank (13) of a tooth (14) of the first toothed wheel (11) can be engaged with a flank (13) of a tooth (14) of the second toothed wheel (12), comprising the steps of:
a) providing the assembly (10),
b) carrying out an angle-resolving scattered light method to determine a macroundulation or macrotopography and a microundulation or microtopography of a surface of the at least one flank (13) of the tooth (14) of the first toothed wheel (11),
c) determining a variation in a microangle distribution A_{q} (25) of the at least one flank (13) of the tooth (14) of the first toothed wheel (11) as a measure of a microstructure and thus determining a condition of the surface of the at least one flank (13) of the tooth (14) of the first toothed wheel (11),
d) representing the condition of the surface of the at least one flank (13) of the tooth (14) of the first toothed wheel (11) in a false colour image and overlaying a contact zone or contact line (22) between the at least one flank (13) of the tooth (14) of the first toothed wheel (11) and the at least one engaging flank (13) of the tooth (14) of the second toothed wheel (12),
e) determining an acoustic angle α_{Aq} (26) relevant to the microangle distribution between a preferred direction created by the machining and the contact zone or contact line (22) between the at least one flank (13) of the tooth (14) of the first toothed wheel (11) and the at least one engaging flank (13) of the tooth (14) of the second toothed wheel (12),
f) grinding the surface of the at least one flank (13) of the tooth (14) of the first toothed wheel (10) based on process variables, in particular a setting of an interleaving (15) and/or a setting of a crowning (16), in particular a height crowning and/or a width crowning, and thus final machining of the contact line or contact zone (22) between the flank (13) of the tooth (14) of the first toothed wheel (11) and the flank (13) of the tooth (14) of the second toothed wheel (12), wherein the surface is ground in such a way that the contact line or contact zone (22) is formed at an acoustic angle of between 5° and 85° or between 95° and 175°, in relation to an axis of an undulation of the engaging flank (13) of the tooth (14) of the second toothed wheel (12) and/or the flank of the tooth of the first toothed wheel (11) in which flank (13) of the tooth (14) of the second toothed wheel (12) engages,
g) providing the assembly (10) having the at least one ground flank (13) of the tooth (14) of the first toothed wheel (11) in a transmission, starting up the transmission.

2. Method according to claim 1, **characterised in that** the angle-resolving scattered light method is carried out to determine a macroundulation or macrotopography and a microundulation or microtopography of a surface for the at least one flank (13) of the tooth (14) of the first toothed wheel (11) and the at least one flank (13) of the tooth (14) of the second toothed wheel (12) engaging in the flank (13) of the tooth (14) of the first toothed wheel (11).

3. Method according to claim 1 or 2, **characterised in that** an indication is given if the acoustic angle α_{Aq} (26) is outside a tolerable value range.

4. Method according to any of claims 1 to 3, **characterised in that** the surface of the at least one flank (13) of the tooth (14) of the first toothed wheel (11) is machined in such a way that it has a set interleaving (15) and a set crowning (16).

## Revendications

1. Procédé permettant d'influer acoustiquement sur des roues dentées (11, 12) comprenant un ensemble (10) avec au moins une première roue dentée (11) avec des dents (14) et une seconde roue dentée avec des dents (12), dans lequel les dents (14) présentent des flancs (13), et dans lequel au moins un flanc (13) d'une dent (14) de la première roue dentée (11) peut être mis en prise avec un flanc (13) d'une dent (14) de la seconde roue dentée (12), comprenant les étapes suivantes :
a) la fourniture de l'ensemble (10),
b) la réalisation d'un procédé de lumière diffusée à résolution angulaire pour la détermination d'une macro-topographie ou ondulation et d'une microtopographie ou ondulation d'une surface d'au moins un flanc (13) de la dent (14) de la première roue dentée (11),
c) la détermination d'une variance d'une distribution de microangles A_{q} (25) d'au moins un flanc (13) de la dent (14) de la première roue dentée (11) comme mesure pour une microstructure et ainsi la détermination d'une nature de la surface d'au moins un flanc (13) de la dent (14) de la première roue dentée (11),
d) la représentation de la nature de la surface d'au moins un flanc (13) de la dent (14) de la première roue dentée (11) dans une photographie en fausses couleurs et la surimpression d'une zone ou ligne de contact (22) entre l'au moins un flanc (13) de la dent (14) de la première roue dentée (11) et l'au moins un flanc (13) de mise en prise de la dent (14) de la seconde roue dentée (12),
e) la détermination d'un angle acoustique α_{Aq} pertinent pour la distribution de microangles (26) entre une direction préférentielle générée par l'usinage et la zone ou ligne de contact (22) entre l'au moins un flanc (13) de la dent (14) de la première roue dentée (11) et l'au moins un flanc (13) de mise en prise de la dent (14) de la seconde roue dentée (12),
f) le polissage de la surface d'au moins un flanc (13) de la dent (14) de la première roue dentée (10) sur la base de variables de processus, en particulier d'un réglage d'un entrelacement (15) et/ou d'un réglage d'un bombement (16), en particulier d'un bombement de hauteur et/ou d'un bombement de largeur, et ainsi l'usinage final de la ligne ou zone de contact (22) entre le flanc (13) de la dent (14) de la première roue dentée (11) et le flanc (13) de la dent (14) de la seconde roue dentée (12), dans lequel la surface est polie de telle manière que la ligne ou zone de contact (22) vienne en prise dans un angle acoustique entre 5° et 85° ou entre 95° et 175°, par rapport à un axe d'une ondulation du flanc de mise en prise (13) de la dent (14) de la seconde roue dentée (12) et/ou du flanc de la dent de la première roue dentée (11) dans le flanc (13) de la dent (14) de la seconde roue dentée (12),
g) la fourniture de l'ensemble (10) avec l'au moins un flanc (13) poli de la dent (14) de la première roue dentée (11) dans un engrenage, la mise en service de l'engrenage.

2. Procédé selon la revendication 1, **caractérisé en ce que** le procédé de lumière diffusée à résolution angulaire est réalisé pour la détermination d'une macro-topographie ou ondulation et d'une microtopographie ou ondulation d'une surface pour l'au moins un flanc (13) de la dent (14) de la première roue dentée (11) et l'au moins un flanc (13), venant en prise dans le flanc (13) de la dent (14) de la première roue dentée (11), de la dent (14) de la seconde roue dentée (12).

3. Procédé selon l'une quelconque des revendications 1 ou 2, **caractérisé en ce qu'**un affichage est effectué, lorsque l'angle acoustique α_{Aq} (26) se trouve en dehors d'une plage de valeur tolérable.

4. Procédé selon l'une quelconque des revendications 1 à 3, **caractérisé en ce que** la surface d'au moins un flanc (13) de la dent (14) de la première roue dentée (11) est usinée de telle manière qu'elle présente un entrelacement (15) réglé et un bombement (16) réglé.
